# EUROPÄISCHE PATENTSCHRIFT

(11) **EP 1 049 728 B1**
(45) Veröffentlichungstag und Bekanntmachung des Hinweises auf die Patenterteilung: **23.04.2003**
(21) Anmeldenummer: 99903607.2
(22) Anmeldetag: 07.01.1999
(51) Int. Cl.: C08F 36/04, C08F 4/52

(54) **VERFAHREN ZUR HERSTELLUNG EINES KATALYSATORSYSTEMS UND DESSEN VERWENDUNG ZUR GASPHASENPOLYMERISATION VON KONJUGIERTEN DIENEN**
METHOD FOR PRODUCING A CATALYST SYSTEM AND USE THEREOF DURING GAS PHASE POLYMERISATION OF CONJUGATED DIENES
PROCEDE POUR LA FABRICATION D'UN SYSTEME DE CATALYSEUR ET SON UTILISATION POUR LA POLYMERISATION EN PHASE GAZEUSE DE DIENES CONJUGES

(30) Priorität: 20.01.1998 DE 19801858
(43) Veröffentlichungstag der Anmeldung: 08.11.2000
(73) Patentinhaber: Bayer Aktiengesellschaft, 51368 Leverkusen (DE)
(72) Erfinder: JENTSCH, Jörg-Dietrich, D-47799 Krefeld (DE); SCHULZE, Tilling, Andreas, D-51373 Leverkusen (DE); STEINHAUSER, Norbert, D-40789 Monheim (DE); SYLVESTER, Gerd, D-51375 Leverkusen (DE); MERSMANN, Franz-Josef, D-51467 Bergisch Gladbach (DE); SCHNEIDER, Jürgen, M., D-50668 Köln (DE)
(86) Internationale Anmeldenummer: EP9900039
(87) Internationale Veröffentlichungsnummer: WO99037695

(56) Entgegenhaltungen:
- EP-A- 0 647 657

## Beschreibung

Die Erfindung betrifft ein Verfahren zur Herstellung eines Katalysatorsystems bestehend aus einer Verbindung der Seltenen Erden, einer aluminiumorganischen Verbindung, einer weiteren Lewissäure, ggf. einem konjugierten Dien und einem inerten, anorganischen oder organischen Trägermaterial, indem man eine Lösung der Verbindung der Seltenen Erden in einem inerten Lösungsmittel und ggf. einem konjugierten Dien und eine Lösung der aluminiumorganischen Verbindung und der weiteren Lewissäure in einem inerten Lösungsmittel vorzugsweise unter einer Inertgasatmosphäre auf das trocken vorgelegte und vorzugsweise bewegte Trägermaterial so dosiert aufbringt, daß die aufgebrachte Lösung vom Trägermaterial vollständig aufgesogen wird.

Polybutadien mit einem hohen Anteil an cis-1,4-Einheiten wird seit längerer Zeit in großtechnischem Maßstab produziert und fiir die Herstellung von Reifen und anderen Gummiwaren verwendet.

Aus umweltrelevanten Gründen ist man bestrebt, die Polymerisation dieses und anderer konjugierter Diene in der Gasphase durchzuführen, da dabei keine Lösungsmittel eingesetzt werden müssen und Emission und Abwasserbelastung verringert werden können.

Zusätzlich kann man durch das Verfahren neuartige Kautschuke mit besonderen Produkteigenschaften herstellen. Insbesondere erhält man im Polymeren besonders gut dispergierte Füllstoffe, wenn diese bei der Polymerisation als Träger der Aktivkomponente des Katalysators zugegen sind.

Aus der EP-B-0647657 ist bereits bekannt, daß man die Polymerisation von konjugierten Dienen, insbesondere von Butadien, ohne Zusatz von Lösungsmitteln in der Gasphase durchführen kann, indem man ein Katalysatorsystem auf der Basis von Verbindungen der Seltenen Erden, einer aluminiumorganischen Verbindung auf einem teilchenförmigen, inerten, anorganischen Feststoff mit einer spezifischen Oberfläche größer als 10 m²/g (BET) und einem Porenvolumen von 0,3 bis 15 ml/g verwendet.

Nach den dort beschriebenen Verfahren zur Herstellung dieses Katalysatorsystems können die einzelnen Komponenten in beliebiger Reihenfolge miteinander vermischt werden. Gemäß einer bevorzugten Ausführungsform zur Herstellung des Katalysatorsystems wird das teilchenförmige, anorganische Trägermaterial zunächst mit einer Teilmenge der Lösung der aluminiumorganischen Verbindung in einem inerten Lösungsmittel behandelt, das Lösungsmittel abdestilliert und der so erhaltene Feststoff zu einer Mischung der übrigen Komponenten des Katalysatorsystems gegeben. Dieses Herstellverfahren kann zu Inhomogenitäten im Katalysatorsystem führen, die durch Einsatz von Hochleistungsrühraggregaten behoben werden können. Die hohe mechanische Beanspruchung der Katalysatorpartikel durch derartige Rühraggregate kann zur Bildung eines hohen Anteils von feinen Partikeln führen, die bei der Polymerisation aus reaktionstechnischen Gründen unerwünscht sind.

Inhomogenitäten können auftreten, wenn jeweils Lösungen mit einer oder mehreren Katalysatorkomponenten hergestellt und vermischt werden und dann das Trägermaterial hinzugefügt wird. Durch diese Vorgehensweise ist die Einstellung der Misch- und Reaktionszeiten der miteinander reagierenden Komponenten - das Seltene Erdmetall einerseits und die aluminiumorganischen Verbindungen andererseits - vor der Zugabe des Trägermaterials nur schwierig im größeren Maßstab zu realisieren.

Es stellte sich daher die Aufgabe, ein Verfahren zur Herstellung eines Katalysator-Systems geeignet für die Gasphasenpolymerisation von konjugierten Dienen zur Verfügung zu stellen, das die Nachteile der bekannten Herstellungsverfahren nicht aufweist.

Dies gelingt mit dem erfindungsgemäßen Verfahren zur Herstellung eines Katalysatorsystems aus:
A) einem Alkoholat der Seltenen Erden (I),
   einem Carboxylat der Seltenen Erden (II),
   einer Komplexverbindung der Seltenen Erden mit Diketonen (III)
   und/oder
   einer Additionsverbindung der Halogenide der Seltenen Erden mit
   einer Sauerstoff- oder Stickstoff-Donator-Verbindung (IV) folgender Formeln:

   (RO)₃M (I)

   (R-CO₂)₃M (II)

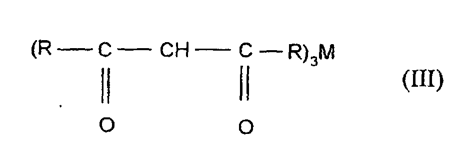

   und

   MX₃ y Donator (IV)
B) einem Aluminiumtrialkyl, einem Dialkylaluminiumhydrid und/oder einem Alumoxan der Formeln (V) - (VII):

   Al(H)x(R¹)₃₋ₓ (V)

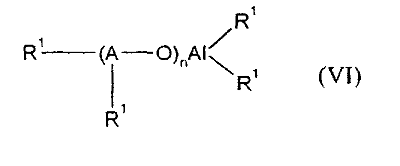

   und 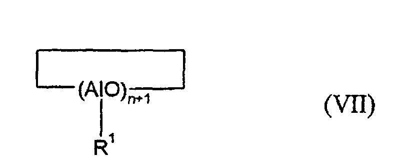 wobei in den Formeln
   - M: ein dreiwertiges Element der Seltenen Erden mit den Ordnungszahlen 57 bis 71 bedeutet,
   die Reste
   - R,: gleich oder verschieden, einen Alkylrest mit C₁-C₂₀ bedeuten,
   die Reste
   - R¹,: gleich oder verschieden, einen C₁-C₁₀-Alkylrest bedeuten,
   - X: für Chlor, Brom oder lod steht
   - x: für 0 oder 1 steht,
   - y: 1 bis 6 bedeutet und
   - n: 1 bis 50 bedeutet,
C) einer weiteren Lewissäure und
D) einem teilchenförmigen, anorganischen oder organischen Feststoff mit einer spezifischen Oberfläche größer als 10 m²/g (BET), einer Korngroße von 10 bis 1000 µm, bevorzugt 100 bis 500 µm, und einem Porenvolumen von 0,3 bis 15 ml/g (bei der Verwendung von Ruß zusätzlich einer DBP-Adsorption von mehr als 30 ml/100 g),
das dadurch gekennzeichnet ist, daß man eine Lösung 1 der Komponenten A in einem inerten, organischen Lösungsmittel und ggf. einem konjugierten Dien E und eine Lösung 2 der Komponenten B und C in einem inerten, organischen Lösungsmittel vorzugsweise unmittelbar vor dem Aufbringen auf D miteinander vermischt und diese vermischte Katalysator-Lösung auf den trocken vorgelegten, vorzugsweise bewegten teilchenförmigen Feststoff D in solchen Mengen aufträgt, daß sie vom Trägermaterial vollständig aufgesogen werden.

In der Komponente A) bedeutet M ein dreiwertiges Element der Seltenen Erden mit den im Periodensystem gekennzeichneten Ordnungszahlen 57 bis 71. Bevorzugt werden solche Verbindungen, in denen M Lanthan, Cer, Praseodym oder Neodym oder ein Gemisch von Elementen der Seltenen Erden, welches mindestens eines der Elemente Lanthan, Cer, Praseodym oder Neodym zu wenigstens 10 Gew.% enthält, bedeutet. Ganz besonders bevorzugt sind Verbindungen, in denen M Lanthan oder Neodym, bzw. ein Gemisch von Seltenen Erden, welches Lanthan oder Neodym zu mindestens 30 Gew.% enthält, bedeutet.

Als Reste R in den Formeln (1) bis (IV) sind insbesondere geradkettige oder verzweigte Alkylreste mit 1 bis 20 Kohlenstoffatomen, bevorzugt 1 bis 15 Kohlenstoffatomen, zu nennen, wie Methyl, Ethyl, n-Propyl, n-Butyl, n-Pentyl, Isopropyl, Isobutyl, tert.-Butyl, 2-Ethylhexyl, neo-Pentyl, neo-Octyl, neo-Decyl, neo-Dodecyl.

Als Alkoholate der Komponente A) werden z. B. genannt: Neodym(III)-n-propanolat, Neodym(III)-n-butanolat, Neodym(III)-n-decanolat, Neodym(III)-iso-propanolat, Neodyin(III)-2-ethyl-hexanolat, Praseodym(III)-n-propanolat, Praseodym(III)-nbutanolat, Praseodym(III)-n-decanolat, Praseodym(III)-iso-propanolat. Praseodym(III)-2-ethyl-hexanolat, Lanthan(III)-n-propanolat, Lanthan(III)-n-butanolat, Lanthan(III)-n-decanolat, Lanthan(III)-isopropanolat, Lanthan(III)-2-ethyl-hexanolat, bevorzugt Neodym(III)-n-butanolat, Neodym(III)-n-decanolat, Neodym(III)-2-ethylhexanolat.

Als Carboxylate der Komponente A) sind geeignet: Lanthan(III)-propionat, Lanthan-(III)-diethylacetat, Lanthan(III)-2-ethyl-hexanoat, Lanthan(III)-stearat, Lanthan(III)-benzoat, Lanthan(III)-cyclohexancarboxylat, Lanthan(III)-oleat, Lanthan(III)-versatat, Lanthan(III)-naphthenat, Praseodym(III)-propionat, Praseodym(III)-diethylacetat, Praseodym(III)-2-ethylhexanoat, Praseodym(III)-stearat, Praseodym(III)-benzoat, Praseodym(III)-cyclohexancarboxylat, Praseodym(III)-oleat, Praseodym(III)-versatat, Praseodym(III)-naphthenat, Neodym(III)-propionat, Neodym(III)-diethylacetat, Neodym(III)-2-ethylhexanoat, Neodym(III)-stearat, Neodym(III)-bezoat, Neodym(III)-cyclohexancarboxylat, Neodym(III)-oleat, Neodym(III)-versatat, Neodym(III)-naphthenat, bevorzugt Neodym(III)-2-ethylhexanoat, Neodym(III)-versatat, Neodym(III)-naphthenat. Besonders bevorzugt wird Neodymversatat eingesetzt.

Als Komplexverbindungen der Komponente A) seien genannt: Lanthan(III)-acetylacetonat, Praseodym(III)-acetylacetonat, Neodym(III)-acetylacetonat, bevorzugt Neodym(III)-acetylacetonat.

Als Additionsverbindungen der Komponente A) mit Donatoren werden beispielsweise genannt: Lanthan(III)-chlorid mit Tributylphosphat, Lanthan(III)-chlorid mit Tetrahydrofuran, Lanthan(III)-chlorid mit iso-Propanol, Lanthan(III)-chlorid mit Pyridin, Lanthan(III)-chlorid mit 2-Ethylhexanol, Lanthan(III)-chlorid mit Ethanol, Praseodym(III)-chlorid mit Tributylphosphat, Praseodym(III)-chlorid mit Tetrahydrofuran, Praseodym(III)-chlord mit iso-Propanol, Praseodym(III)-chlorid mit Pyridin, Praseodym(III)-chlorid mit 2-Ethylhexanol, Praseodym(III)-chlorid mit Ethanol, Neodym(III)-chlorid mit Tributylphosphat, Neodym(III)-chlorid mit Tetrahydrofuran, Neodym(III)-chlorid mit iso-Propanol, Neodym(III)-chlorid mit Pyridin, Neodym(III)-chlorid mit 2-Ethylhexanol, Neodym(III)-chlorid mit Ethanol, Lanthan(III)-bromid mit Tributylphosphat, Lanthan(III)-bromid mit Tetrahydrofuran, Lanthan(III)-bromid mit iso-Propanol, Lanthan(III)-bromid mit Pyridin, Lanthan(III)-bromid mit 2-Ethylhexanol, Lanthan(III)-bromid mit Ethanol, Praseodym(III)-bromid mit Tributylphosphat, Praseodym(III)-bromid mit Tetrahydrofuran, Praseodym(III)-bromid mit iso-Propanol, Praseodym(III)-bromid mit Pyridin, Praseodym(III)-bromid mit 2-Ethylhexanol, Praseodym(III)-bromid mit Ethanol, Neodym(III)-bromid mit Tributylphosphat, Neodym(III)-bromid mit Tetrahydrofuran, Neodym(III)-bromid mit iso-Propanol, Neodym(III)-bromid mit Pyridin, Neodym(III)-bromid mit 2-Ethylhexanol, Neodym(III)-bromid mit Ethanol, bevorzugt Lanthan(III)-chlorid mit Tributylphosphat, Lanthan(III)-chlorid mit Pyridin, Lanthan(III)-chlorid mit 2-Ethylhexanol, Praseodym(III)-chlorid mit Tributylphosphat, Praseodym(III)-chlorid mit 2-Ethylhexanol, Neodym(III)-chlorid mit Tributylphosphat, Neodym(III)-chlorid mit Tetrahydrofuran, Neodym(III)-chlorid mit 2-Ethylhexanol, Neodym(III)-chlorid mit Pyridin, Neodym(III)-chlorid mit 2-Ethylhexanol, Neodym(III)-chlorid mit Ethanol.

Die Verbindungen der Seltenen Erden können einzeln oder im Gemisch untereinander eingesetzt werden.

Ganz besonders bevorzugt werden Neodymversatat, Neodymoctanoat und/oder Neodymnaphthenat als Komponente A) eingesetzt.

In der Formel (V) bis (VII) der Komponente B) bedeutet R¹ einen geradkettigen oder verzweigten Alkylrest mit 1 bis 10 C-Atomen, bevorzugt 1 bis 4 C-Atomen. Beispiele für geeignete Aluminiumalkyle der Formel (V) sind:
Trimethylaluminium, Triethylaluminium, Tri-n-propylaluminium, Triisopropylaluminium, Tri-n-butylaluminium, Triisobutylaluminium, Tripentylaluminium, Trihexylaluminium, Tricyclohexylaluminium, Trioctylaluminium, Diethylaluminiumhydrid, Din-butylaluminiumhydrid und Di-isobutylaluminiumhydrid. Bevorzugt werden Triethylaluminium, Triisobutylaluminium und Di-iso-butylaluminiumhydrid. Besonders bevorzugt wird Di-isobutylaluminiumhydrid.

Als Beispiele fiir Alumoxane (VI) und (VII) werden genannt: Methylalumoxan, Ethylalumoxan und iso-Butylalumoxan, bevorzugt Methylalumoxan und iso-Butyl-alumoxan.

Als Komponente C) werden sogenannte Lewis-Säuren eingesetzt. Beispielhaft seien die Organometallhalogenide erwähnt, in denen das Metallatom der Gruppe 3a) oder 4a) angehört, sowie Halogenide der Elemente der Gruppe 3a), 4a) und 5a) des Periodensystems, wie es im "Handbook of Chemistry and Physics" 45th Edition 1964-65 dargestellt ist. Genannt werden insbesondere:
Methylaluminiumdibromid, Methylaluminiumdichlorid, Ethytaluminiumdibromid, Ethylaluminiumdichlorid, Butylaluminiumdibromid, Butylaluminiumdichlorid, Dimethylaluminiumbromid, Dimethylaluminiumchlorid, Diethylaluminiumbromid, Diethylaluminiumchlorid, Dibutylaaluminiumbromid, Dibutylaluminiumchlorid, Methylaluminiumsesquibromid, Methylaluminiumsesquichlorid, Ethylaluminiumsesquibromid, Ethylaluminiumsesquichlorid, Aluminiumtribromid, Antimontrichlorid, Antimonpentachlorid, Phosphortrichlorid, Phosphorpentachlorid, Zinntetrachlorid.

Bevorzugt werden Diethylaluminiumchlorid, Ethylaluminiumsesquichlorid, Ethylaluminiumdichlorid, Diethylaluminiumbromid, Ethylaluminiumsesquibromid und/oder Ethylaluminiumdibromid eingesetzt.

Als Komponente C) können auch die Reaktionsprodutke aus Aluminiumverbindungen, wie sie als Komponente B) beschrieben werden, mit Halogenen oder Halogenverbindungen, z. B. Triethylaluminium mit Brom oder Triethylaluminium mit Butylchlorid, eingesetzt werden. In diesem Fall kann die Umsetzung getrennt durchgeführt werden, oder die für die Umsetzung benötigte Menge der Alkylaluminiumverbindung wird zu der als Komponente B) benötigten Menge addiert

Bevorzugt werden Ethylaluminiumsesquichlorid, Butylchlorid und Butylbromid.

Als Komponente D) werden teilchenförmige, anorganische oder organische Feststoffe mit einer spezifischen Oberfläche größer als 10, bevorzugt 10 bis 1 000 m²/g (BET), einer Korngröße von 10 bis 1000 µm, bevorzugt 50 bis 500 µm, und einem Porenvolumen von 0,3 bis 15 ml/g, bevorzugt von 0,5 bis 5 ml/g eingesetzt. Bei der Verwendung von Rußen wird zusätzlich zum Porenvolumen die DBP-Adsorption als Eignungskriterium herangezogen. Diese soll zwischen 10 bis 300 ml/100 g liegen, bevorzugt zwischen 60 bis 150 ml/100 g, besonders bevorzugt zwischen 90 und 130 ml/100 g.

Die spezifische Oberfläche (BET) wird in üblicher Weise bestimmt nach S. Brunauer, P.H. Emmet und Teller, J. Anorg. Chem.Soc. 60 (2), 309 (1938), das Porenvolumen wird bestimmt durch die Zentrifugationsmethode nach M. McDaniel., J.Colloid Interface Sci. 78, 31 (1980) und die DBP-Adsorption nach DIN 53 601.

Als anorganische Feststoffe eignen sich insbesondere Silicagele, Fällungskieselsäuren, Tone, Alumosilikate, Talkum, Zeolithe, Ruß, anorganische Oxide, wie Siliciumdioxid, Aluminiumoxid, Magnesiumoxid, Titandioxid, Siliciumcarbid. Bevorzugt sind Silicagele, Fällungskieselsäuren, Zeolithe und Ruß, besonders bevorzugt Fällungskieselsäuren und Ruß. Unter inert wird in diesem Fall verstanden, daß die Feststoffe so beschaffen sind, bzw. durch eine Vorbehandlung, wie z.B. Kalzinieren, so vorbehandelt werden, daß die reaktive Oberfläche die Bildung eines aktiven Katalysator nicht behindert ,bzw. mit den Monomeren reagiert.

Die genannten anorganischen Feststoffe, die der obengenannten Spezifikation genügen und deshalb für den Einsatz geeignet sind, werden beispielsweise näher beschrieben in Ullmanns, Enzyclopädie der technischen Chemie, Band 21, S 439 ff. (Silicagele), Band 23, S. 311 ff. (Tone), Band 14, S. 633 ff. (Ruße), Band 24. S 575 ff. und Band 17, S. 9 ff. (Zeolithe)

Die anorganischen Feststoffe können einzeln oder im Gemisch untereinander eingesetzt werden.

Als organische Feststoffe eignen sich ebenfalls polymere Materialien, bevorzugt in Form frei fließender Pulver, die so beschaffen sind, bzw. durch eine Vorbehandlung, wie z.B. Trocknen, so vorbehandelt werden, daß die reaktive Oberfläche die Bildung eines aktiven Katalysator nicht behindert ,bzw. mit den Monomeren reagiert , eine Korngröße im Bereich von 10 bis 1000 µm und die ein Porenvolumen im Bereich von 0,3 bis 15 ml/g aufweisen. Ein Beispiel für ein derartiges Material ist pulverförmiges Polypropylen.

Das Molverhältnis, in denen die Katalysatorkomponenten A) bis D) eingesetzt werden, kann in weiten Grenzen variiert werden.

Das Molverhältnis der Komponente A) zu Komponente B) beträgt 1:1 bis 1:1000, bevorzugt 1:3 bis 1:200, besonders bevorzugt 1:3 bis 1:100. Das Molverhältnis der Komponente A) zu Komponente C) beträgt 1:0,4 bis 1:15, bevorzugt 1:0,5 bis 1:8.

Auf 100g der Komponente D) werden 0,1mMol bis 1 Mol der Komponente A), bevorzugt 1 bis 50mMol der Komponente A) eingesetzt.

Es ist auch möglich, den Katalysatorkomponenten A) bis D) noch eine weitere Komponente E) zuzusetzen. Diese Komponente E) ist ein konjugiertes Dien, das dasselbe Dien sein kann, das später mit dem Katalysator polymerisiert werden soll. Bevorzugt werden verwendet Butadien und Isopren.

Wird die Komponente E) dem Katalysator zugesetzt, so beträgt die Menge an E) bevorzugt 1 bis 1000 mol, bezogen auf 1 mol der Komponente A), besonders bevorzugt 1 bis 100 mol, bezogen auf 1 mol der Komponente A). Ganz besonders bevorzugt werden 1 bis 50 mol, bezogen auf 1 mol der Komponente A), an E) eingesetzt.

Das erfindungsgemäße Verfahren zur Herstellung des zuvor beschriebenen Katalysatorsystems wird durchgeführt, indem man wenigstens 2 Lösungen in einein inerten Lösungsmittel herstellt, wobei die eine Lösung die Komponente A) und ggf E) enthält und die zweite Lösung die Komponente B) und C) enthalt Als inerte Losungsmittel können aliphatische, cycloaliphatische und/oder aromatische Kohlenwasserstoffe als Lösungsmittel, wie Pentan, Hexan, Heptan, Cyclohexan, Benzol und/oder Toluol eingesetzt werden.

Die beiden Lösungen werden nacheinander oder gleichzeitig ohne vorherige Vermischung oder unmittelbar vor dem Auftragen auf den teilchenförmigen Feststoff vorzugsweise mit einem Statikmischer oder einer Mischdüse gemischt auf den Feststoff D) aufgetragen. Vorzugsweise vor, während und ggf. nach dem Auftragen der Katalysatorlösung 3) wird der Feststoff bewegt, z. B. in einem Rührkessel mit einem konventionellen Rühraggregat, wie z. B. einem Kreuzbalkenrührer oder einem Wendelrührer, oder in einer weitereren bevorzugten Form in einem Pflugscharmischer.

Die Imprägnierung des Trägermaterials mit Wirkstofflösung kann auch in einem Wirbelbett erfolgen. Dabei werden auf das Trägermaterial, das durch einen Inertgasstrom fluidisiert wird, die Wirkstofflösungen aufgebracht, z.B. durch Versprühen mittels einer Düse. Über einen internen Kreislauf kann das Inertgas, nachdem es von mittransportiertem Lösungsmittel befreit wurde, in den Reaktor zurückgeführt werden. Das inerte Lösungsmittel kann zur Zubereitung der Wirkstofflösungen wiederverwendet werden.

Da das Katalysatorsystem mit Luft und/oder Feuchtigkeit reagieren kann, ist es vorteilhaft, das Feststoffpulver D) vor dem Auftragen der Katalysatorlösung 3) zu trocknen, die Luft zu entfernen und unter einer Inertgasatmosphäre vor, während und nach dem Auftragen der Katalysatorlösung 3) zu halten. Das Auftragen der Katalysatorlösung 3) erfolgt vorzugsweise so gesteuert, daß die zugegebene, vorzugsweise verdüste, Lösung sofort vom Feststoff D) aufgenommen wird. Die Bildung von Verklumpungen und Inhomogenitäten wird somit minimiert.

Das erfindungsgemäße Verfahren kann auch kontinuierlich durchgeführt werden.

Desweiteren ist es möglich, durch Einstellen des Verhältnisses der Volumina des Lösungsmittels der Lösung 3) zu dem der Poren des Feststoffs D) das Wirksamkeitsniveau des Katalysators zu steuern. Vorzugsweise sollte nur soviel Katalysatorlösung auf den Feststoff aufgetragen werden als dieser aufnehmen kann. Das Feststoffpulver kann somit als frei fließendes Pulver nach dem Auftragen der Wirstofflösungen weiterhin leicht gerührt und bewegt werden.

Im Prinzip ist es zwar möglich, die Menge des eingesetzten inerten Lösungsmittels in weiten Grenzen zu variieren. Wie dargestellt wird aber aus ökologischen und ökonomischen Gründen die Menge möglichst gering gehalten. Die Menge richtet sich nach der Menge und der Löslichkeit der einzelnen Komponenten sowie dem Porenvolumen/DBP-Adsorption der Komponente D). Bevorzugt wird eine Menge von 10 bis 2 000 Teilen des Lösungsmittels, bezogen auf 100 Teile der Komponente D), eingesetzt.

Die Herstellung des Katalysators kann in einem weiten Temperaturbereich erfolgen. Im allgemeinen liegt die Temperatur zwischen Schmelz- und Siedepunkt der Komponenten A) bis C) bzw. des inerten Lösungsmittels. Üblicherweise wird bei Temperaturen von -20 bis 100°C, vorzugsweise 20 bis 40°C, gearbeitet.

Im Anschluß an die Imprägnierung des Trägermaterials mit Wirkstofflösung wird in einer bevorzugten Ausführungsform das inerte Lösungsmittel destillativ entfernt. Die Destillation kann sowohl in dem gleichen Behälter, in dem auch die Imprägnierung durchgeführt wurde, als auch in einer separaten Apparatur, z.B. einem Wirbelschichttrockner erfolgen. Bei der Entfernung des Lösungsmittels muß der Zutritt von Luft und Feuchtigkeit vermieden werden. Die Destillation wird je nach verwendetem Lösungsmittel bei Temperaturen von 0 bis 150 °C, vorzugsweise bei 10 bis 80°C, und Drücken von 0,001 mbar bis 20 bar absolut, vorzugsweise 0,001 mbar bis Normaldruck durchgeführt. Die Destillation kann auch kontinuierlich durchgerührt werden. Das unter Inertbedingungen aufgefangene Kondensat kann ohne weitere Aufarbeitung als Lösungsmittel für die in der Imprägnierung eingesetzten Wirkstoffe wiederverwendet werden.

Die Erfindung betrifft auch den Einsatz des erfindungsgemäß hergestellten Katalysator in einem Verfahren zur Polymerisation von konjugierten Dienen, z. B. von 1,3-Butadien, Isopren, Pentadien oder Dimethylbutadien in der Gasphase.

Diese Polymerisation erfolgt, indem man das gasförmige konjugierte Dien mit dem erfindungsgemäß hergestellten Katalysator in Berührung bringt. Dem gasförmigen Monomeren können weitere Gase zugemischt werden, die entweder der Verdünnung bzw. der Wärmeabführung oder der Regelung des Molekulargewichtes dienen. Die Polymerisation kann bei Drücken von Imbar bis 50 bar, bevorzugt 1 bis 20 bar, durchgeführt werden.

Im allgemeinen wird die Polymerisation bei Temperaturen von -20 bis 250°C, bevorzugt bei 0 bis 200°C, besonders bevorzugt bei 20 bis 160°C, durchgeführt.

Die Polymerisation kann in jeder fiir eine Gasphasenpolymerisation geeigneten Apparatur bewerkstelligt werden. So kann z. B. ein Rührreaktor, ein Drehreaktor oder ein Fließbettreaktor oder eine Kombination dieser Reaktortypen verwendet werden. Um ein Verkleben zu vermeiden, kann der Zusatz von bekannten Pudermitteln hilfreich sein. Als Pudermittel können alle inerten, feinkörnigen Feststoffe verwendet werden, insbesondere auch die als Komponente D) beschriebenen inerten, anorganischen Feststoffe.

Die erhaltenen Polymerisate weisen einen Gehalt an cis-1,4-Doppelbindungen von etwa 60 bis 99 % auf. Das Molgewicht kann durch die Zusammensetzung des Katalysators und durch die Variation der Polymerisationsbedingungen verändert werden. Üblich sind Molgewichte von 10³ bis 10⁶, gemessen mit GPC (Gel-Permeations-Chromatographie wie z. B. beschrieben in M. Hoffmann, H. Krömer, R. Kuhn, "Polymeranalytik 1", Georg Thieme Verlag, Stuttgart, 1977, S. 349 ff. mit universeller Eichung).

Die Mooneyviskosität, ML (1+4', 100°C)), liegt üblicherweise im Bereich zwischen 30 und 180 ME. Durch die Polymerisation in der Gasphase können auch sehr hochmolekulare Polymere hergestellt werden, die durch Lösungspolymerisation wegen der hohen Viskosität und der Möglichkeit von Übertragungsreaktionen durch das verwendete Lösungsmittel nur unter extrem hohem Aufwand zugänglich sind.

Die erhaltenen Polymerisate können auf übliche Weise kompoundiert und vulkanisiert werden.

In einer gängigen Ausführungsform wird bei der Polymerisation von 1,3-Butadien wie folgt verfahren:

Das erfindungsgemäß hergestellte Katalysatorsystem wird in eine Apparatur überführt, die geeignet ist, den pulverförmigen Katalysator in Bewegung zu halten. Das kann z. B. durch Rühren, Drehen und/oder einen Gasstrom erfolgen. Das zunächst im Gasraum befindliche inerte Gas, z. B. Stickstoff, wird durch das gasförmige Monomere ersetzt. Dabei setzt eine sofortige Polymerisation ein und die Temperatur steigt an. Das Monomere wird, gegebenenfalls verdünnt, mit einem Inertgas so schnell dem Reaktor zugeführt, daß die gewünschte Reaktionstemperatur nicht überschritten wird. Die Reaktionstemperatur kann auch auf übliche Weise durch Heizen bzw. Kühlen eingestellt werden. Die Polymerisation wird durch Abstellen der Monomerzufuhr beendet. Das Polymere kann in der bekannten Weise weiterbehandelt werden, indem man den Katalysator desaktiviert und das Polymere mit bekannten Alterungsschutzmitteln behandelt.

Die nachfolgenden Beispiele sollen die vorliegend beschriebene Erfindung verdeutlichen, ohne diese jedoch auf diese Beispiele einzuschränken

### Beispiele

### Beispiel 1

### 1a) Vorbehandlung des Trägermaterials:

Als Trägermaterial wurde Zeosil 1165 MP verwendet. Zeosil 1165 MP ist eine agglomerierte Fällungskieselsäure der Fa. Rhône-Poulenc mit einer Oberfläche nach BET von 139 m²/g. Das Porenvolumen beträgt 1,97 ml/g. Vor dem Einsatz wird das Zeosil 1165 MP 32 h bei 350°C unter Stickstoffatmosphäre getrocknet, danach unter Stickstoffatmosphäre abgekühlt und unter Stickstoffatmosphäre gehalten.

Zudem wurde Ruß N115, ein Produkt der Fa. Degussa, als Trägermaterial verwendet. Der Ruß hat eine Oberfläche nach BET von 145 m²/g und eine DBP-Adsorption von 113 ml/100 g. Der Mittelwert des Partikeldurchmessers beträgt 485 µm. Dieses Material wurde bei 450°C 32 h unter Stickstoff getrocknet und unter Stickstoff umgefüllt und gelagert.

### 1b) Herstellung eines Nd-Katalysators

### Allgemeine Hinweise:

Die Einsatzstoffe und der Katalysator sind sehr luft- und feuchtigkeitsempfindlich. Einwiegen, Reaktion und Abfüllen müssen in Schlenck-Arbeitstechnik unter striktem Ausschluß von Sauerstoff und Feuchtigkeit vorgenommen werden.

Die Inhaltsstoffe von Lösung 1 und Lösung 2 reagieren innerhalb sehr kurzer Zeit miteinander unter Ausfällung eines Feststoffs. Zur homogenen Imprägnierung des Trägers muß die Mischzeit der beiden Lösungen entsprechend kurz sein und darf erst unmittelbar vor dem Benetzen des Trägers erfolgen. Dies kann man dadurch erreichen, daß man Lösung 1 und Lösung 2 getrennt ansetzt und beide Teillosungen kurz vor Auftropfen auf den Trager in einem kurzen Y-Stück zusammenfuhrt

1021 g vorbehandeltes Zeosil 1165 wird im 10-Liter-Doppelmantelgefäß unter Schutzgas vorgelegt und mit dem Schrägblattrührer intensiv durchmischt (100 U/min). Eine Lösung von 12,6 g (51 mmol) EASC und 290,4 g (2,042 mol) DIBAH in 1207,0 g Hexan (Lösung 1) und eine Lösung bestehend aus 28,1 g 9,9 %iger Butadien-Hexan-Lösung (51 mmol Butadien), 172,3 g 19,48 %iger Neodymversatat-Lösung (51 mmol Neodymversatat) und 310,0 g Hexan (Lösung 2) werden innerhalb von 3 Stunden über ein Y-Stück gemeinsam auf den Träger gepumpt. Die Innentemperatur soll 20 bis 30 °C betragen. Die individuellen Flußraten von Lösung 1 und Lösung 2 sind so einzuregulieren, daß pro Zeiteinheit gleiche Massen von Lösung 1 und Lösung 2 miteinander im Y-Stück reagieren. Während der Imprägnierung wird ein Gemisch aus Isobutan und Wasserstoff freigesetzt. Nach der Belegung wird 30 Minuten bei 20 °C nachgerührt und anschließend das Hexan bei 0,1 mbar und 50 °C abdestilliert. Man erhält 1330 g eines freifließenden weißen Pulvers.

### Beispiel 2

Es gelten die gleichen allgemeinen Hinweise wie bei Beispiel 1. Das Trägermaterial wird wie in Beispiel 1 beschrieben vorbehandelt.

895 g vorbehandeltes Zeosil 1165 wird im 10-Liter-Doppelmantelgefäß unter Schutzgas vorgelegt und mit dem Schrägblattrührer intensiv durchmischt (100 U/min). Eine Lösung von 11,1 g (45 mmol) EASC und 254,6 g (1,790 mol) DIBAH in 193 g Hexan (Lösung 1) und eine Lösung bestehend aus 6,1 g Isopren (90 mmol), 141,9 g 20,57 %iger Neodymversatat-Lösung (45 mmol Neodymversatat) und 310,0 g Hexan (Lösung 2) werden innerhalb von 3 Stunden über ein Y-Stück gemeinsam auf den Träger gepumpt. Die Innentemperatur soll 20 bis 30 °C betragen. Die individuellen Flußraten von Lösung 1 und Lösung 2 sind so einzuregulieren, daß pro Zeiteinheit gleiche Massen von Lösung 1 und Lösung 2 miteinander im Y-Stück reagieren. Während der Imprägnierung wird ein Gemisch aus Isobutan und Wasserstoff freigesetzt. Nach der Belegung wird 30 Minuten bei 20 °C nachgeruhrt und anschließend das Hexan bei 0,1 mbar und 50 °C abdestilliert. Man erhält 1330 g eines freifließenden weißen Pulvers.

### Beispiel 3

Es gelten die gleichen allgemeinen Hinweise wie bei Beispiel 1. Das Trägermaterial wird wie in Beispiel 1 beschrieben vorbehandelt.

423 g vorbehandelter Ruß N115 (Fa. Degussa) wird im 10-Liter-Doppelmantelgefäß unter Schutzgas vorgelegt und mit dem Schrägblattrührer intensiv durchmischt (100 U/min). Eine Lösung von 8,7 g (21 mmol) EASC und 120,3 g (0,846 mol) DIBAH in 83,5 g Hexan (Lösung 1) und eine Lösung bestehend aus 2,9 g Isopren (43 mmol), 67,9 g 20 %iger Neodymversatat-Lösung (21 mmol Neodymversatat) (Lösung 2) werden innerhalb von 3 Stunden über ein Y-Stück gemeinsam auf den Träger gepumpt. Die Innentemperatur soll 20 bis 30 °C betragen. Die individuellen Flußraten von Lösung 1 und Lösung 2 sind so einzuregulieren, daß pro Zeiteinheit gleiche Massen von Lösung 1 und Lösung 2 miteinander im Y-Stück reagieren. Während der Imprägnierung wird ein Gemisch aus Isobutan und Wasserstoff freigesetzt. Nach der Belegung wird 30 Minuten bei 20 °C nachgerührt und anschließend das Hexan bei 0,1 mbar und 50 °C abdestilliert. Man erhält 580 g eines freifließenden schwarzen Pulvers.

### Beispiel 4

### Polymerisation:

Die Polymerisation wurde in einem Rotationsverdampfer, der mit einem Magnetrührstab, einem Quecksilber-Überdruckventil und Anschlüssen zu einer Vakuumpumpe und zur Versorgung mit gasförmigem Stickstoff und Butadien sowie einem bis fast auf den Boden des 1 1-Kolbens reichenden Thermofühler ausgerüstet war, durchgeführt. Die Neigung des Rotationsverdampfers wurde so eingestellt, daß die Drehachse mit der des Stabmagneten einen Winkel von 45° bildete. Das gesamte Volumen der Apparatur betrug 2 Liter. In den Kolben wurden 9,8 g des Katalysators aus Beispiel 2) unter Stickstoff eingefüllt. Die Apparatur wurde auf 1 mbar evakuiert und unter Rühren und Drehen mit gasförmigem, trockenen Butadien gefüllt. Die Temperatur stieg innerhalb einer Minute auf 44°C. Zugleich bildete sich ein Unterdruck aus. Nach 9 Minuten war der Butadiendruck von 1 000 auf 413 mbar abgefallen. Die Temperatur betrug 39°C. Es wurde erneut Butadien bis zu einem Druck von 1 000 mbar zugegeben. Die Temperatur stieg innerhalb von 2 Minuten auf 52°C an und fiel dann langsam wieder ab. Nach weiteren 7 Minuten betrug die Temperatur 45°C bei einem Butadiendruck von 440 mbar. Im weiteren Verlauf des Versuchs wurde Butadien in solchen Abständen zugegeben, daß die Temperatur zwischen 30 und 90°C gehalten wurde.

Nach 45 Minuten waren 20 g Butadien verbraucht und das Produkt wurde grobkörniger. Nach einer Stunde waren 25 g Butadien verbraucht.

Nach 4,5 Stunden wurden die Rührung und Drehung abgestellt, da eine Vermischung des Produktes nicht mehr möglich war.

Nach 6,5 Stunden wurde die Apparatur evakuiert und anschließend mit N₂ aufgefüllt. Zu diesem Zeitpunkt waren 123 g Butadien verbraucht.

22 Stunden nach dem Beginn des Versuches wurde die Apparatur erneut evakuiert, mit Butadien gefüllt und der Versuch fortgesetzt, so daß die Temperatur zwischen 40 und 60°C gehalten wurde. Nach weiteren 3 Stunden wurde das entstandene Produkt aus dem Kolben genommen. Das Gewicht betrug 189,5 g. Das Produkt wurde auf der Walze mit 2 g Stearinsäure und 2 g Vulkanox BKF der Bayer AG abgestoppt und stabilisiert.

Mooneyviskosität des Polymeren: ML (1+4', 100°C)) betrug 147 ME.
Gehalt an cis-1,4-Doppelbindungen: 96 %.

### Beispiel 5

### Polymerisation

Die Polymerisation wurde durchgeführt in einem mit einem Wendelrührer ausgestatteten 2-Liter-Büchi-Glasautoklaven, der vor Reaktionsbeginn mit einem bar Stickstoff beaufschlagt war. 3 g des Katalysator aus Beispiel 3) wurden mittels einer Schleuse in den Reaktor befördert, und die Reaktionstemperatur wurde über den Mantelkreislauf so eingeregelt, daß sich in der gerührten Schüttung eine Temperatur von 80°C einstellen konnte. Die Polymerisation wurde durch Eindosierung von vorgeheiztem gasförmigen Butadien in den Reaktor gestartet, wobei ein Butadien-Partialdruck von 2 bar angefahren wurde. Zu Reaktionsstart stieg die Schüttungstemperatur trotz Mantel-Gegenkühlung auf etwa 86°C an, nach 15 Minuten konnte die Reaktion über den gesamten Verlauf isotherm bei 80°C gefahren werden. Der Versuch wurde in der Semi-Batch-Fahrweise durchgeführt, d. h. es wurde stets die in der Reaktion verbrauchte Butadienmenge nachdosiert, jedoch kein Katalysator, und es wurde auch bis zum Versuchsende kein Produkt ausgeschleust. Das von Beginn an rasche Anwachsen der gerührten Schüttung, die aufgrund der heftigen Durchmischung mit dem Wendelrührer auch als Pseudo-Wirbelbett bezeichnet werden soll, konnte in dem Glasreaktor gut beobachtet werden, des weiteren ein stetiger Anstieg der Produkt-Korngröße von zunächst wenigen 100 µm im Durchmesser auf zuletzt mehr als 1 mm. Im Reaktionsverlauf kam es zu leichten Partikel-Agglomerationen, die die Durchmischung aber nicht wesentlich behinderten. Nach 2½ Stunden wurde der Versuch bei rund 340 g gebildetem Polymer beendet.

Das Produkt wurde nach Abreaktion des noch im Reaktor befindlichen Resthutadiens über einen Kugelhahn in der Bodenplatte des Reaktors abgelassen und anschließend unverzüglich durch Einmischen von 3 g Stearinsäure und 3 g Vulkanox BKF der Bayer AG auf der Walze abgestoppt und stabilisiert.

Mooneyviskosität des Polymeren: ML (1+4', 100°C)) betrug 178 ME
Gehalt an cis-1,4-Doppelbindungen 96.5 %.

## Patentansprüche

1. Verfahren zur Herstellung eines Katalysatorsystems bestehend aus:
A) einem Alkoholat der Seltenen Erden (I),
einem Carboxylat der Seltenen Erden (II),
einer Komplexverbindung der Seltenen Erden mit Diketonen (III)
und/oder
einer Additionsverbindung der Halogenide der Seltenen Erden mit einer Sauerstoff- oder Stickstoff-Donator-Verbindung (IV) folgender Formeln:
(RO)₃M (I)
(R-CO₂)₃M (II) 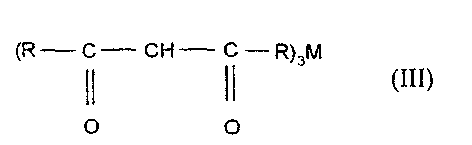
und
MX₃ y Donator (IV)
B) einem Aluminiumtrialkyl und/oder einem Dialkylaluminiumhydrid der Formel (V) und/oder einem Alumoxan der Formeln (VI) - (VII)
Al(H)x(R¹)₃₋ₓ (V) 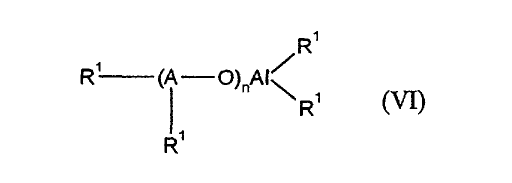
und 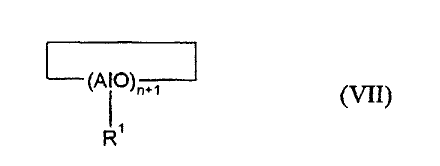 wobei in den Formeln
die Reste R, gleich oder verschieden, für einen Alkylrest mit C₁-C₂₀ stehen,
M ein dreiwertiges Element der Seltenen Erden mit den Ordnungszahlen 57 bis 71 bedeutet,
X für Chlor, Brom oder Iod steht
x für 0 oder 1 steht,
y 1 bis 6 bedeutet und
n 1 bis 50 bedeutet,
die Reste R¹, gleich oder verschieden, für einen Alkylrest mit C₁-C₁₀ stehen,
C) einer weiteren Lewissäure und
D) einem inerten, teilchenförmigen, anorganischen oder organischen Feststoff mit einer spezifischen Oberfläche größer als 10 m²/g (BET) und einem Porenvolumen von 0,3 bis 15 ml/g und bei der Verwendung von Ruß zusätzlich einer DBP-Adsorption von 10-300 ml/100 g, **dadurch gekennzeichnet, daß** man eine Lösung 1 der Komponenten A) in einem inerten, organischen Lösungsmittel und ggf. einem konjugierten Dien E), und eine Lösung 2 der Komponenten B) und C) in einem inerten organischen Lösungsmittel unmittelbar vor dem Aufbringen auf D) miteinander vermischt und diese vermischte Katalysator-Lösung 3 auf den trocken vorgelegten, teilchenförmigen Feststoff D) in solchen Mengen aufträgt, daß sie vom Trägermaterial aufgesogen wird.

2. Verfahren nach Anspruch 1, **dadurch gekennzeichnet, daß** der Feststoff D) zumindest während des Auftragens bewegt wird.

3. Verfahren nach Anspruch 1 oder 2, **dadurch gekennzeichnet, daß** der Feststoff D) vor dem Auftragen getrocknet und unter einer Inertgasatmosphäre vor, während und nach dem Auftragen der Katalysatorkomponenten-Lösung 3 gehalten wird.

4. Verfahren nach einem oder mehreren Ansprüchen 1 bis 3, **dadurch gekennzeichnet, daß** für beide Lösungen 1 und 2 dasselbe inerte, organische Lösungsmittel verwendet wird.

5. Verfahren nach einem oder mehreren Ansprüchen 1 bis 4, **dadurch gekennzeichnet, daß** die Aufbringungsgeschwindigkeit der Katalysator-Lösung 3) so gesteuert wird, das die zugegebene Lösung 3 sofort vom Feststoff D) aufgenommen wird.

6. Verfahren nach einem oder mehreren Ansprüchen 1 bis 5, **dadurch gekennzeichnet, daß** das Auftragen der Wirkstofflösungen bei Temperaturen von -20 bis 100°C, vorzugsweise von 20 bis 40°C, erfolgt

7. Verfahren nach einem oder mehreren Ansprüchen 1 bis 6, **dadurch gekennzeichnet, daß** durch das Verhältnis des Volumens des Lösungsmittels der Lösung 3 zu dem der Poren des Feststoffs D) das Wirksamkeitsniveau des Katalysatorsystems eingestellt wird.

8. Verfahren nach einem oder mehreren Ansprüchen 1 bis 7, **dadurch gekennzeichnet, daß** bei der Katalysatorherstellung kein Feinanteil entsteht, der bei der technischen Durchführung der Polymerisation stört.

9. Verfahren nach einem oder mehreren Ansprüchen 1 bis 8, **dadurch gekennzeichnet, daß** die Katalysatorkörner gleichmäßig mit Wirkstoffen belegt sind.

10. Verfahren nach einem oder mehreren Ansprüchen 1 bis 9, **dadurch gekennzeichnet, daß** ein Trägermaterial mit einer Korngröße von 10 bis 1000 µm verwendet wird.

11. Verfahren nach einem oder mehreren Ansprüchen 1 bis 10, **dadurch gekennzeichnet, daß** es in einem Wirbelbettreaktor durchgeführt wird.

12. Verfahren nach einem oder mehreren Ansprüchen 1 bis 11, **dadurch gekennzeichnet, daß** das Abdestillieren des Lösungsmittels von dem mit Wirkstoffen imprägnierten Trägermaterial bei Temperaturen im Bereich von 0 bis 150°C erfolgt.

13. Verfahren nach einem oder mehreren Ansprüchen 1 bis 12, **dadurch gekennzeichnet, daß** das abdestillierte Lösungsmittel zur Zubereitung der Wirkstofflösungen wiederverwendet wird.

14. Verfahren nach einem oder mehreren Ansprüchen 1 bis 11, **dadurch gekennzeichnet, daß** das Lösungsmittel nicht abdestilliert wird

15. Verwendung des Katalysators erhalten nach einem oder mehreren der Ansprüche 1 bis 14 in einem Verfahren zur Polymerisation von konjugierten Dienen in der Gasphase.

## Revendications

1. Procédé pour la préparation d'une composition catalytique consistant en
A) un alcoolate des terres rares (I),
un carboxylate des terres rares (II),
un complexe des terres rares et de dicétones (III)
et/ou
un composé d'addition entre des halogénures des terres rares et un composé donateur d'oxygène ou d'azote (IV) aux formules respectives suivantes :
(RO)₃M (I)
(R-CO₂)₃M (II) 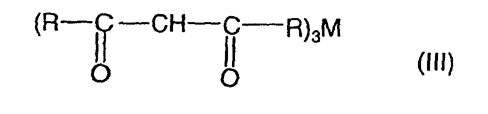
et
MX₃ y donateur (IV)
B) un trialkylaluminium et/ou un hydrure de dialkylaluminium de formule (V) et/ou un alumoxane de formule (VI) ou (VII)
Al(H)x(R¹)₃₋ₓ (V) 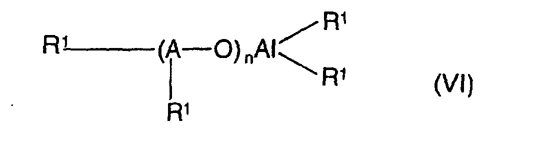
et 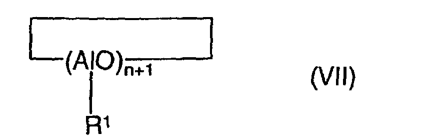 les symboles de ces formules ayant les significations suivantes :
les symboles R, ayant des significations identiques ou différentes, représentent chacun un groupe alkyle en C₁ à C₂₀,
M représente un élément trivalent des terres rares de numéro atomique 57 à 71,
X représente le chlore, le brome ou l'iode
x est égal à 0 ou 1,
y est un nombre allant de 1 à 6 et
n est un nombre de 1 à 50,
les symboles R¹, ayant des significations identiques ou différentes, représentent chacun un groupe alkyle en C₁ à C₁₀,
C) un autre acide de Lewis et
D) une matière solide minérale ou organique inerte en particules à une surface spécifique BET supérieure à 10 m²/g et un volume de pores de 0,3 à 15 ml/g et en outre, lorsqu'il s'agit de noirs de carbone, une adsorption du DBP de 10 à 300 ml/100 g,
**caractérisé en ce que** l'on mélange entre elles une solution 1 des composants A dans un solvant organique inerte et le cas échéant un diène conjugué E) et une solution 2 des composants B) et C) dans un solvant organique inerte, immédiatement avant l'application sur D), puis on applique cette solution de catalyseur mélangée 3 sur la matière solide D) séchée au préalable, en particules, en quantité telle qu'elle soit absorbée par la matière de support.

2. Procédé selon la revendication 1, **caractérisé en ce que** la matière solide D) est en mouvement, au moins au cours de l'application.

3. Procédé selon la revendication 1 ou 2, **caractérisé en ce que** la matière solide D) est séchée avant l'application et maintenue en atmosphère de gaz inerte avant, durant et après l'application de la solution des composants catalytiques 3.

4. Procédé selon une ou plusieurs des revendications 1 à 3, **caractérisé en ce que**, pour les deux solutions 1 et 2, on utilise le même solvant organique inerte.

5. Procédé selon une ou plusieurs des revendications 1 à 4, **caractérisé en ce que** le débit d'application de la solution de catalyseur 3 est réglé en sorte qu'elle soit absorbée immédiatement par la matière solide D).

6. Procédé selon une ou plusieurs des revendications 1 à 5, **caractérisé en ce que** les solutions de composants actifs sont appliquées à des températures allant de -20 à +100°C, de préférence de 20 à 40°C.

7. Procédé selon une ou plusieurs des revendications 1 à 6, **caractérisé en ce que** l'on règle le niveau d'activité de la composition catalytique par le rapport entre le volume du solvant de la solution 3 et le volume de pores de la matière solide D).

8. Procédé selon une ou plusieurs des revendications 1 à 7, **caractérisé en ce que**, à la préparation du catalyseur, il ne se forme pas de fines gênantes à la mise en oeuvre industrielle de la polymérisation.

9. Procédé selon une ou plusieurs des revendications 1 à 8, **caractérisé en ce que** les grains de la composition catalytique sont uniformément garnis de substances actives.

10. Procédé selon une ou plusieurs des revendications 1 à 9, **caractérisé en ce que** l'on utilise une matière de support à une dimension de grain de 10 à 1000 µm.

11. Procédé selon une ou plusieurs des revendications 1 à 10, **caractérisé en ce que** l'on opère dans un réacteur à lit tourbillonnaire.

12. Procédé selon un ou plusieurs des revendications 1 à 11, **caractérisé en ce que**, à partir de la matière de support imprégnée des substances actives, on distille le solvant à des températures dans l'intervalle de 0 à 150°C.

13. Procédé selon une ou plusieurs des revendications 1 à 12, **caractérisé en ce que** l'on réutilise le solvant distillé pour la préparation des solutions de substances actives.

14. Procédé selon un ou plusieurs des revendications 1 à 11, **caractérisé en ce que** le solvant n'est pas distillé.

15. Utilisation du catalyseur obtenu selon une ou plusieurs des revendications 1 à 14 dans un procédé pour la polymérisation de diènes conjugués en phase gazeuse.

## Claims

1. Process for the preparation of a catalyst system consisting of:
A) a rare earth alcoholate (I),
a rare earth carboxylate (II),
a complex compound of rare earths with diketones (III)
and/or
an addition compound of the rare earth halides with an oxygen or nitrogen donor compound (IV), of the following formulae:
(RO)₃M (I)
(R-CO₂)₃M (II) 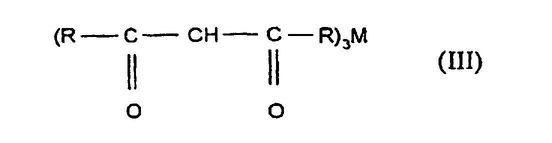
and
MX₃ · y donor (IV)
B) an aluminium trialkyl and/or a dialkylaluminium hydride of formula (V) and/or an alumoxane of formulae (VI) to (VII) :
Al(H)x(R¹)₃₋ₓ (V) 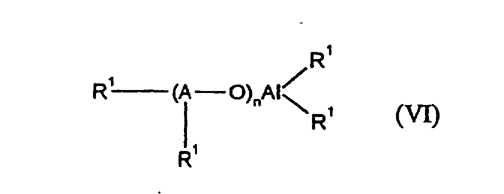
and 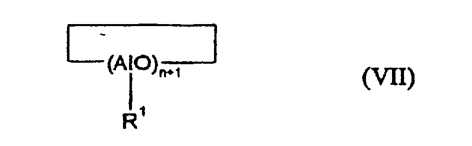 wherein in the formulae
the radicals R, which may be the same or different, represent an alkyl radical having C₁-C₂₀,
M represents a trivalent rare earth element having an atomic number from 57 to 71,
X represents chlorine, bromine or iodine,
x represents 0 or 1,
y represents from 1 to 6, and
n represents from 1 to 50,
the radicals R¹, which may be the same or different, represent an alkyl radical having C₁-C₁₀,
C) a further Lewis acid, and
D) an inert, particulate, inorganic or organic solid having a specific surface area greater than 10 m²/g (BET) and a pore volume of from 0.3 to 15 ml/g and, where carbon black is used, additionally having a DBP adsorption of from 10 to 300 ml/100 g, **characterised in that** a solution 1 of component A) in an inert, organic solvent, and optionally a conjugated diene E), and a solution 2 of components B) and C) in an inert, organic solvent are mixed together immediately before application to D), and that mixed catalyst solution 3 is applied to the dry, particulate solid D) in such amounts that it is absorbed by the support material.

2. Process according to claim 1, **characterised in that** the solid D) is agitated at least during the application.

3. Process according to claim 1 or 2, **characterised in that** the solid D) is dried before the application and is maintained under an inert gas atmosphere before, during and after application of the catalyst component solution 3.

4. Process according to one or more of claims 1 to 3, **characterised in that** the same inert, organic solvent is used for the two solutions 1 and 2.

5. Process according to one or more of claims 1 to 4, **characterised in that** the rate of application of the catalyst solution 3) is so controlled that the added solution 3 is immediately absorbed by the solid D).

6. Process according to one or more of claims 1 to 5, **characterised in that** application of the active ingredient solutions is effected at temperatures of from -20 to 100°C, preferably from 20 to 40°C.

7. Process according to one or more of claims 1 to 6, **characterised in that** the level of activity of the catalyst system is adjusted by means of the ratio of the volume of the solvent for solution 3 to the volume 0 of the pores of the solid D).

8. Process according to one or more of claims 1 to 7, **characterised in that** in the preparation of the catalyst no fine content is formed that is disadvantageous in the technical implementation of the polymerisation.

9. Process according to one or more of claims 1 to 8, **characterised in that** the catalyst particles are coated uniformly with active ingredients.

10. Process according to one or more of claims 1 to 9, **characterised in that** a support material having a particle size of from 10 to 1000 µm is used.

11. Process according to one or more of claims 1 to 10, **characterised in that** it is carried out in a fluidised-bed reactor.

12. Process according to one or more of claims 1 to 11, **characterised in that** the distilling off of the solvent from the support material impregnated with active ingredients is carried out at temperatures in the range of from 0 to 150°C.

13. Process according to one or more of claims 1 to 12, **characterised in that** the solvent that is distilled off is re-used for preparing the active ingredient solutions.

14. Process according to one or more of claims 1 to 11, **characterised in that** the solvent is not distilled off.

15. Use of the catalyst obtained according to one or more of claims 1 to 14 in a process for the polymerisation of conjugated dienes in the gas phase.
